# FASCICULE DE BREVET EUROPEEN

(11) **EP 3 006 278 B1**
(45) Date de publication et mention de la délivrance du brevet: **01.08.2018**
(21) Numéro de dépôt: 15186190.3
(22) Date de dépôt: 22.09.2015
(51) Int. Cl.: B60S 1/08, B60S 1/52, B60S 1/56, G02B 27/00

(54) **DISPOSITIF DE NETTOYAGE D'UNE CAMÉRA D'AIDE À LA CONDUITE D'UN VÉHICULE AUTOMOBILE**
REINIGUNGSVORRICHTUNG FÜR KAMERA EINES FAHRERASSISTENZSYSTEMS IN EINEM KRAFTFAHRZEUG
DEVICE FOR CLEANING A DRIVING ASSISTANCE CAMERA OF A MOTOR VEHICLE

(30) Priorité: 10.10.2014 FR 1459715
(43) Date de publication de la demande: 13.04.2016
(73) Titulaire: Valeo Systèmes d'Essuyage, 78322 Le Mesnil Saint Denis (FR)
(72) Inventeur: ROUSSEAU, Jean-Franois, 63340 CHARBONNIER LES MINES (FR)
(74) Mandataire: Vincent, Catherine Marie Marguerite

(56) Documents cités:
- CN-U- 201 923 085
- KR-A- 20110 026 220
- US-A1- 2013 146 577

## Description

L'invention a trait au domaine de l'aide à la conduite et notamment aux caméras implantées sur certains véhicules. Plus particulièrement, l'invention a trait à un dispositif de nettoyage d'une telle caméra d'aide à la conduite pour que la qualité de l'information fournie au conducteur soit optimale.

Certains véhicules automobiles sont désormais équipés de moyens de prise de vue, et particulièrement de caméra, pour aider le conducteur notamment dans ses manoeuvres de stationnement et/ou de marche arrière. L'information fournie au conducteur est d'autant plus utile lorsque l'image acquise par les moyens de prise de vue est nette.

La présente invention, comme définie par la revendication indépendante 1, s'inscrit dans ce contexte et elle a pour objectif de proposer un dispositif de nettoyage des caméras qui soit particulièrement efficace. Dans ce but, l'invention a pour objet un dispositif de nettoyage d'une lentille de caméra d'un véhicule automobile adaptée à réaliser des prises de vue selon un axe optique longitudinal, et dans lequel on prévoit une tête porteuse de moyens de nettoyage, disposée au moins en partie autour de la caméra et agencée de sorte qu'une partie de la tête est disposée selon l'axe optique en aval de la lentille, dans une position fixe par rapport à la caméra, et avantageusement hors du champ de la caméra.

Le document CN201923085 divulgue un dispositif de nettoyage de caméra dans lequel une partie d'une tête de nettoyage, c'est-à-dire une tête porteuse de moyens de nettoyage de la lentille, est en aval de la lentille dans le sens de ce qui vient d'être décrit, notamment dans une position fixe.

On comprend par « en aval de la lentille » une position dans laquelle la partie de la tête en aval de la lentille sur l'axe optique est disposée entre la lentille et la scène de route dont la lentille participe à la prise de vue. Par ailleurs, on comprend par une position « hors champ de la caméra » du dispositif de nettoyage le fait que la partie du dispositif de nettoyage disposée en aval de la lentille ne gêne pas la prise de vue par la caméra de l'élément de scène de route directement à proximité du véhicule, de sorte que l'information d'aide à la conduite qui est donnée au conducteur est fiable et utile, d'autant plus qu'elle est particulièrement nette grâce à l'utilisation régulière des moyens de nettoyage selon l'invention.

Le fait que la tête de nettoyage soit fixe par rapport à la caméra simplifie la structure du dispositif de nettoyage qui ne comporte pas d'élément mobile. L'encombrement du dispositif de nettoyage est ainsi facile à prendre en considération dans l'implantation du dispositif dans un véhicule automobile, et la simplicité de fabrication ainsi que la fiabilité dans le temps du dispositif sont améliorées par rapport à des systèmes existants.

Selon des caractéristiques d'un mode de mise en oeuvre préféré de l'invention, la lentille est portée par un objectif de section circulaire et la tête porteuse des moyens de nettoyage présente une forme générale annulaire complémentaire de la forme de l'objectif circulaire, de manière à pouvoir être disposée autour de la lentille. La tête porteuse des moyens de nettoyage est agencée par rapport à l'objectif de la caméra de sorte que l'axe définissant longitudinalement la tête est confondu avec un axe de la caméra, et notamment l'axe optique défini par la lentille. La tête comporte en outre une paroi annulaire interne porteuse des moyens de nettoyage et agencée de sorte que lesdits moyens de nettoyage soient orientées vers la lentille.

On pourra également prévoir que la tête porteuse des moyens de nettoyage comporte au moins deux parties différenciables, parmi lesquelles une première partie annulaire, formant base et présentant des dimensions aptes à être disposée autour de l'objectif de la caméra, et une deuxième partie, formant support des moyens de nettoyage. La deuxième partie est agencée de sorte que les moyens de nettoyage sont disposés longitudinalement en aval de la lentille et orientés vers celle-ci.

Selon un ensemble de caractéristiques propres à un mode de réalisation particulier de l'invention, prises seules ou en combinaison, les moyens de nettoyage portés par la tête consistent en des moyens de projection de type gicleur, aptes à projeter un liquide de nettoyage sur la lentille. La paroi annulaire interne de la tête peut alors être munie d'une pluralité de buses de projection formant les moyens de type gicleur et par lesquelles un liquide de nettoyage est apte à sortir en direction de la lentille. On peut prévoir dans ce cas que la tête de nettoyage comporte en outre un conduit interne de circulation de liquide aménagé dans l'épaisseur de la tête pour desservir chaque buse et relié à au moins un tuyau d'arrivée d'eau. Un agencement particulier du dispositif dans ce premier mode de réalisation est tel que la paroi annulaire interne est parallèle à l'axe de la tête annulaire, les buses étant formées par un alésage débouchant sur la paroi annulaire interne et s'étendant depuis le conduit interne de circulation de liquide, chaque alésage étant incliné par rapport à la normale à la paroi annulaire interne en direction de la partie de la tête disposée autour de l'objectif pour permettre l'éjection de liquide en direction de la lentille disposée longitudinalement en amont desdites buses.

On pourra en outre prévoir que la tête de nettoyage comporte deux arrivées d'eau diamétralement opposées. Selon l'invention, la tête de nettoyage comporte une fente d'évacuation s'étendant radialement depuis la paroi interne vers l'extérieur de la tête, ladite fente étant disposée verticalement en bas de la tête dans la position fixe de la tête par rapport à la caméra.

Selon un ensemble de caractéristiques propres à un mode de réalisation particulier de l'invention, prises seules ou en combinaison, les moyens de nettoyage portés par la tête consistent en des moyens de décongélation de la lentille. On prévoit dans ce cas que les moyens de décongélation peuvent consister en un élément chauffant disposé sur la paroi interne de la tête, et que cet élément chauffant peut consister en une bague disposée sur tout le pourtour de la paroi interne. L'élément chauffant peut être collé sur la paroi interne, ou moulé avec la paroi interne. On prévoira que la tête peut comporter un orifice apte à recevoir un câble de commande permettant de transmettre les instructions de commande de ces moyens de décongélation.

Par ailleurs, on pourra combiner les caractéristiques des deux modes de réalisation, de sorte que les moyens de nettoyage portés par la tête consistent en des buses de projection et en des éléments chauffants disposés distinctement sur la paroi annulaire interne de la tête. Plus particulièrement, les buses de projection et les éléments chauffants, soudés ou collés, sont disposés alternativement sur tout le pourtour de la paroi annulaire de la tête.

L'invention concerne également un véhicule automobile comportant un dispositif de nettoyage d'une caméra tel qu'il vient d'être décrit précédemment.

Dans un mode de mise en oeuvre préféré de l'invention, la caméra apte à être nettoyée par ledit dispositif de nettoyage est une caméra de recul, disposée à l'arrière du véhicule et orientée pour prendre des vues d'une scène de route s'étendant à l'arrière du véhicule. L'invention trouve ainsi une application particulièrement avantageuse, mais non exclusive, dans le domaine de l'assistance au parking des véhicules automobiles.

D'autres caractéristiques et avantages de la présente invention apparaitront plus clairement à l'aide de la description et des dessins parmi lesquels :
- la figure 1 est une vue en perspective, vue de trois quart avant, d'un dispositif de nettoyage selon une premier mode de réalisation de l'invention, dans une représentation éclatée de la tête de nettoyage et de la caméra ;
- la figure 2 est une vue en perspective, vue de trois quart avant, du dispositif de nettoyage de la figure 1, cette fois dans une représentation assemblée ;
- la figure 3 est une vue en coupe longitudinale du dispositif de la figure 2 ;
- la figure 4 est une vue en perspective, par le dessus, d'un dispositif de nettoyage selon une variante du premier mode de réalisation ;
- la figure 5 est une vue en perspective, vue de trois quart avant, d'un dispositif de nettoyage selon un deuxième mode de réalisation de l'invention, dans une représentation assemblée, le deuxième mode de réalisation différant notamment du premier mode de réalisation en ce que les moyens de nettoyage portés par la tête sont ici des moyens chauffants plutôt que des moyens de projection ;
- la figure 6 est une vue en coupe longitudinale du dispositif de la figure 5.

Un dispositif de nettoyage 1 selon l'invention comporte notamment une caméra 2 et une tête 4 porteuse de moyens de nettoyage 6, ces deux éléments que sont la caméra et la tête étant fixes l'un par rapport à l'autre. La caméra 2 forme des moyens de prise de vue d'une scène de route située indifféremment aux alentours du véhicule, et avantageusement derrière le véhicule pour donner une information au conducteur lorsque celui-ci recule.

La caméra 2 de recul est fixée dans un élément de structure du véhicule, à proximité par exemple du pare-chocs arrière. Elle comporte à une extrémité longitudinale, ici tournée vers l'arrière du véhicule, un objectif 7 présentant la forme d'un cylindre de section circulaire et qui présente à son extrémité libre une lentille 8, qu'il convient de nettoyer à une périodicité donnée, ou avant chaque utilisation de la caméra de recul. Il est avantageux de prévoir que la caméra et la tête de nettoyage sont implantées dans la structure du véhicule automobile de sorte que l'extrémité de la caméra permettant la prise de vue soit disposée la plus proche possible de la carrosserie extérieure du véhicule afin d'acquérir des images de la scène de route les plus larges possibles.

La tête 4 porteuse des moyens de nettoyage comporte au moins une première partie annulaire 10, formant base et dont le diamètre interne est sensiblement supérieur au diamètre externe de l'objectif 7, ainsi qu'une deuxième partie 12 également annulaire, formant support des moyens de nettoyage et présentant ici un diamètre légèrement inférieur à celui de la base 10. Lorsque la tête est montée de façon fixe autour de la lentille, la première partie est disposée autour de l'objectif et la deuxième partie est disposée longitudinalement en aval de la lentille. Les moyens de nettoyage sont orientés vers la lentille.

La deuxième partie 12 de la tête, formant support des moyens de nettoyage, est délimitée longitudinalement à une extrémité par une face d'extrémité distale 14 orientée vers l'extérieur du véhicule. La face d'extrémité distale 14 est ici représentée plane mais on comprend qu'elle pourra présenter une forme différente notamment pour s'adapter à l'encombrement de la structure du véhicule autour de la caméra et pour venir en affleurement de la carrosserie extérieure du véhicule.

La deuxième partie 12 est délimitée en outre, transversalement, par une paroi annulaire interne 16, directement au voisinage de la lentille. Dans les différentes réalisations illustrées, on observe que c'est la paroi annulaire interne 16 qui porte les moyens de nettoyage de la lentille, tandis que les moyens de commande de ces moyens de nettoyage sont connectés à l'extérieur de la tête de nettoyage.

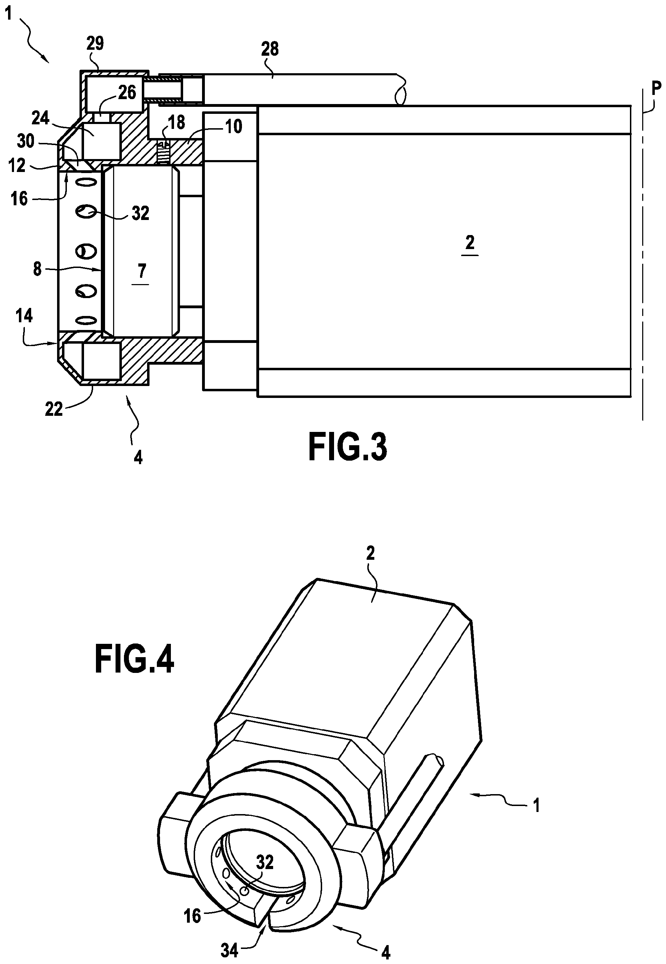

Tel que décrit précédemment, la tête 4 porteuse des moyens de nettoyage est rendue fixe par rapport à la caméra. On pourra prévoir des moyens de fixation coopérants entre la caméra et la tête de nettoyage, par exemple par une vis de serrage 18 visible sur la figure 4. On pourra également prévoir de fixer la tête 4 à un élément de structure du véhicule, avantageusement le même que celui sur lequel est fixée la caméra 2. On comprend que dans la position assemblée de la tête et de la caméra, il importe d'une part que les moyens de nettoyage soient orientés vers la lentille pour avoir effet sur celle-ci lorsqu'ils sont commandés en allumage, et il importe d'autre part que ces moyens de nettoyage et la paroi annulaire interne 16 qui les porte ne soient pas dans le champ de la caméra.

On peut définir une position de la tête par rapport à la caméra qui soit conforme à la position souhaitée par l'invention en se référant à la figure 3 notamment. Dans une projection dans un plan vertical et transversal, perpendiculaire à l'axe optique, référencé « P » sur la figure 3, la paroi annulaire interne entoure la lentille, tandis que longitudinalement, la paroi annulaire interne est sensiblement affleurante avec la lentille, en aval par rapport à cette dernière, c'est-à-dire entre la lentille et la scène de route filmée par la caméra.

Selon différents modes de réalisation, parmi lesquels deux sont représentés à titre d'exemple ci-après, on pourra faire varier le type de moyens de nettoyage et l'inclinaison de la paroi annulaire interne qui les porte pour le bon impact de l'action des moyens de nettoyage sur la lentille.

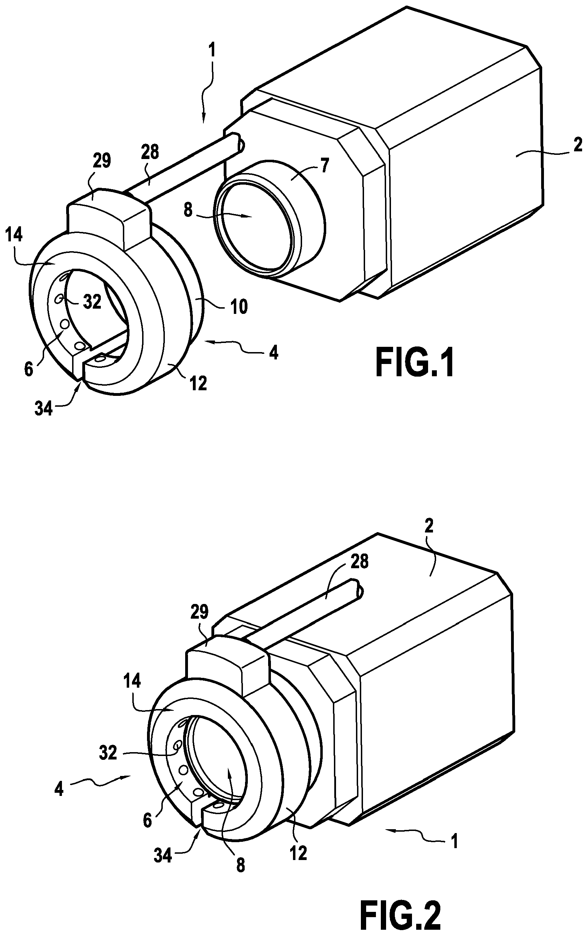

Dans un premier mode de réalisation, illustré notamment sur les figures 1 à 4, les moyens de nettoyage portés par la paroi annulaire interne 16 de la tête consistent en des moyens de projection 20, de type gicleur, aptes à projeter sur la lentille un fluide qui peut être notamment du liquide de nettoyage, ou de l'air sous pression.

La tête 4 comporte alors un collet 22 s'étendant longitudinalement à cheval de la première et de la deuxième partie et à l'intérieur duquel est creusé un conduit interne 24 de circulation du fluide qui s'étend de façon annulaire dans l'épaisseur de la tête, autour de l'axe de celle-ci. Le conduit est agencé de sorte que débouchent d'une part au moins un alésage radial extérieur 26 sur lequel se raccorde un tuyau d'arrivé d'eau 28, par l'intermédiaire d'un bossage 29 en saillie du collet permettant la connexion du tuyau sans que celui-ci repose sur la tête de nettoyage, et d'autre part une pluralité d'alésages radiaux intérieurs 30, débouchant à l'opposé sur la paroi annulaire interne et formant ainsi sur cette paroi annulaire interne 16 de la tête une pluralité de buses 32 formant les moyens de projection de type gicleur. Le liquide de nettoyage, ou l'air, est apte à sortir par ces buses en direction de la lentille.

Les buses de projection 32 sont avantageusement disposées sur tout le pourtour de la tête. On prévoit une disposition régulière de ces buses, le nombre de buses et l'espacement entre chaque buse étant laissés à l'appréciation du constructeur. Les buses sont disposées sur la paroi annulaire interne 16 en cercle autour de l'axe de la tête de nettoyage, et les buses 32 et la paroi annulaire interne 16 sont agencées de telle sorte que les buses sont orientées pour éjecter le liquide selon une composante transversale vers l'intérieur de la tête, c'est à dire en direction de l'axe de la tête de nettoyage annulaire, et selon une composante longitudinale vers la première partie de la tête de nettoyage formant base. Selon le mode de réalisation illustré, la paroi annulaire interne est parallèle à l'axe de la tête annulaire et les alésages radiaux intérieurs qui forment les buses sont inclinés par rapport à la normale à la paroi annulaire interne en direction de la base de la tête disposée autour de l'objectif pour permettre l'éjection de liquide vers l'intérieur de la tête et en direction de la première partie formant base de la tête, de manière à ce que le liquide éjecté entre en contact avec la lentille disposée longitudinalement en amont desdites buses.

En variante, illustrée sur la figure 4, on peut prévoir que la tête de nettoyage comporte deux tuyaux d'arrivée de liquide de nettoyage raccordés au conduit interne respectivement par un alésage radial extérieur, les tuyaux d'arrivé étant ici diamétralement opposés. On comprend que sans sortir du contexte de l'invention, le nombre de tuyaux d'arrivée de liquide de nettoyage et leur agencement peuvent être différents, et que l'on peut avoir aussi bien un unique tuyau d'arrivée qu'une multitude. Les tuyaux d'arrivée de liquide de nettoyage sont reliés à leur extrémité opposée à une source de liquide mis sous pression par un dispositif de type pompe pour permettre l'arrivée de liquide avec une pression suffisante pour être projetée par les buses de projection. On comprendra que dans une variante, les tuyaux et le conduit de circulation à l'intérieur de la tête de nettoyage pourraient permettre, en lieu et place de la circulation d'un liquide de nettoyage, la circulation d'air sous pression pour que les buses de projection permettent l'éjection d'air dont le souffle permet de chasser les salissures présentes sur la lentille.

La tête de nettoyage comporte en outre une fente d'évacuation 34 s'étendant radialement depuis la paroi interne vers l'extérieur de la tête. Cette fente est particulièrement utile pour l'évacuation par gravité des salissures enlevées de la lentille et du liquide de nettoyage lorsqu'un tel liquide est projeté par les moyens de nettoyage. A cet effet, il convient de disposer la tête de nettoyage par rapport à la structure du véhicule de sorte que la fente soit disposée verticalement sous la tête, tel que cela est visible sur les figures 1, 2 et 4.

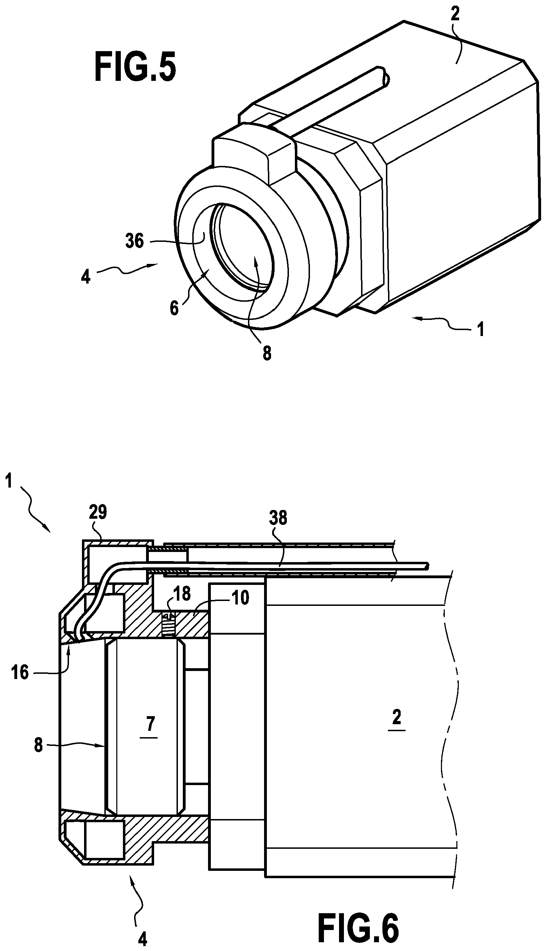

Dans un deuxième mode de réalisation, illustré sur les figures 5 et 6, les moyens de nettoyage portés par la tête consistent en des moyens de décongélation 36 de la lentille, et plus particulièrement en un élément chauffant disposé sur la paroi annulaire interne 16 de la tête de nettoyage.

L'élément chauffant doit être souple pour suivre la courbure de la paroi annulaire interne et il peut être constitué de façon classique par un fil électrique à forte résistivité noyé dans une plaque flexible, la montée en température du fil étant pilotée par une instruction de commande générée par le module de commande associé au dispositif de nettoyage.

On pourra prévoir que cet élément chauffant prenne la forme d'une bague disposée sur tout le pourtour de la paroi interne, mais il sera compris qu'en variante, et notamment dans le cas d'une combinaison des deux modes de réalisation tels qu'ils sont présentés distinctement dans la description, l'élément chauffant pourra être disposé de façon discontinue sur le pourtour de la paroi interne, pièce par pièce. Dans les deux cas, l'élément chauffant formant les moyens de décongélation 36 pourra être collé sur la paroi annulaire interne 16 dans une étape de mise en oeuvre ultérieure à la fabrication de la tête de nettoyage, ou bien être incorporé dans la paroi annulaire interne lors du moulage de la tête de nettoyage.

Dans ce deuxième mode de réalisation, un conduit interne est également formé dans l'épaisseur de la tête de nettoyage, de manière à permettre le passage, depuis l'extérieur du dispositif vers la paroi annulaire interne et l'élément chauffant, de câbles de commande 38 desdits moyens de décongélation, reliés à leur extrémité opposée à des actionneurs ici non représentés et pilotés par le module de commande.

On va maintenant décrire le fonctionnement du dispositif de nettoyage selon l'invention, en s'appuyant notamment sur les figures 1 à 4 illustrant le premier mode de réalisation. Il sera compris que le principe de fonctionnement général du dispositif ne diffère pas selon que l'on ait un dispositif correspondant au premier ou au deuxième mode de réalisation, dès lors que la caméra et la tête de nettoyage restent fixes.

La tête de nettoyage 4 est fixe par rapport à la caméra, et à la lentille 8, de manière à ne pas se trouver dans le champ de vision de la caméra. La tête ne gêne pas ainsi la qualité de prise de vue et l'aide à la conduite apportée au conducteur.

Lorsque l'on détecte une situation dans laquelle la caméra de recul va potentiellement être utilisée, par exemple lorsque l'embrayage est enclenché, ou bien lorsque la périodicité de nettoyage préalablement définie arrive à terme, un module de commande génère une instruction de nettoyage, ici une alimentation en liquide de nettoyage du circuit interne de la tête de nettoyage par l'intermédiaire d'un ou de plusieurs tuyaux d'arrivée.

Le liquide de nettoyage sous pression dans le tuyau d'arrivée se répand dans le circuit interne pour déboucher sur chacune des buses de nettoyage. L'orientation de l'alésage définissant chacune des buses éjecte le liquide en amont de la tête de nettoyage par rapport à l'axe optique et de façon centrée sur cet axe optique de manière à asperger abondamment la lentille. Le liquide de nettoyage est ensuite évacué par gravité au niveau de la fente réalisée radialement dans l'épaisseur de la tête de nettoyage, et cette évacuation de liquide s'accompagne de l'évacuation des salissures présentes à l'origine sur la lentille.

On comprend que des caractéristiques du dispositif de nettoyage selon le deuxième mode de réalisation pourraient être prises en combinaison avec des caractéristiques du dispositif de nettoyage selon le premier mode de réalisation. On pourrait ainsi prévoir que des moyens de décongélation, notamment des éléments partiels chauffants, soient collés entre deux buses de projection, et que le module de commande associé au dispositif de nettoyage soit apte à générer telle ou telle instruction de commande, c'est-à-dire une instruction d'injection de liquide de nettoyage dans les tuyaux d'arrivée d'eau ou une instruction de commande électrique pour monter la température des éléments partiels chauffants, selon les informations détectées comme la température extérieure par exemple. Les instructions de commande pourront être générées simultanément, pour réaliser en même temps une décongélation et une projection en direction de la lentille, notamment si le fluide projeté est de l'air et non pas du liquide comme décrit précédemment, ou elles pourront être générées en décalage.

On comprendra qu'une telle combinaison peut être intéressante dans le fait que l'élément chauffant rapporté sur la paroi interne entre les buses de projection peut faire office de moyen de décongélation de la lentille tel qu'il a été décrit précédemment, mais également de moyen de réchauffement des buses de projection elle-même pour éviter la formation de gel en sortie de ces buses.

La description qui précède explique clairement comment l'invention permet d'atteindre les objectifs qu'elle s'est fixés et notamment de proposer un dispositif de nettoyage dans lequel une tête est apte à nettoyer correctement une lentille de caméra, de recul notamment, sans d'une part nécessiter de moyens d'entraînement additionnels pour entraîner en déplacement ladite tête de nettoyage vers une position active de nettoyage de la lentille et sans d'autre part que la tête de nettoyage soit dans le champ de la caméra et ne gêne la prise de vue.

Bien entendu, diverses modifications peuvent être apportées par l'homme du métier aux structures du dispositif de nettoyage, dès lors que l'on permet d'assurer un nettoyage de la lentille de la caméra avec une tête de nettoyage qui reste à demeure en aval de la lentille par rapport à l'axe optique, sans toutefois se trouver dans le champ de la caméra grâce à des dimensions permettant d'entourer la lentille. Une telle combinaison de caractéristiques permet d'assurer un nettoyage de la lentille avec un mécanisme non mobile et donc fiable, mais dont la position à demeure n'est pas préjudiciable pour la prise de vue et l'assistance de conduite apportée au conducteur. Les modes de réalisation qui ont été décrits en détails ci-dessus ne sont pas limitatifs de l'invention.

## Revendications

1. Dispositif de nettoyage (1) d'une lentille (8) de caméra (2) d'un véhicule automobile adaptée à réaliser des prises de vue selon un axe optique longitudinal, comportant une tête de nettoyage (4) disposée dans une position fixe par rapport à la caméra (2) et présentant une forme générale annulaire, d'axe confondu avec l'axe de la lentille, ladite tête de nettoyage comportant une paroi annulaire interne (16) disposée selon l'axe optique en aval de la lentille et porteuse de moyens de nettoyage (20, 36) orientés vers la lentille, la paroi annulaire interne (16) de la tête (4) étant munie d'au moins une pluralité de buses (32) par lesquelles un fluide est apte à sortir en direction de la lentille (8) **caractérisé en ce que** la tête de nettoyage (4) comporte une fente d'évacuation (34) s'étendant radialement depuis la paroi annulaire interne (16) vers l'extérieur de la tête, ladite fente étant disposée verticalement en bas de la tête dans la position fixe de la tête par rapport à la caméra (2).

2. Dispositif de nettoyage selon la revendication 1, **caractérisé en ce que** la tête de nettoyage (4) comporte au moins une première partie annulaire (10), formant base et présentant des dimensions aptes à être disposée autour de la caméra (2), et une deuxième partie (12), formant support des moyens de nettoyage (20, 36), ladite deuxième partie étant agencée de sorte que lesdits moyens de nettoyage sont disposés selon l'axe optique en aval de la lentille (8) et orientés vers celle-ci.

3. Dispositif de nettoyage selon la revendication 2, **caractérisé en ce que** la deuxième partie (12) présente un diamètre inférieur à celui de la première partie (10).

4. Dispositif de nettoyage selon l'une des revendications précédentes, **caractérisé en ce que** ladite paroi annulaire interne (16) est parallèle à l'axe de la tête (4), les buses (32) étant formées par un alésage (30) débouchant sur la paroi annulaire interne et incliné par rapport à la normale à la paroi annulaire interne en direction de la partie de la tête disposée autour de l'objectif pour permettre l'éjection de liquide en direction de la lentille (8) disposée longitudinalement en amont desdites buses.

5. Dispositif de nettoyage selon l'une des revendications précédentes, **caractérisé en ce que** ladite tête de nettoyage (4) comporte en outre un conduit interne (24) de circulation de liquide aménagé dans l'épaisseur de la tête pour desservir chaque buse (32) et relié à au moins un tuyau d'arrivée d'eau (28).

6. Dispositif de nettoyage selon la revendication 5, **caractérisé en ce que** les buses (32) s'étendent depuis le conduit interne (24) de circulation de liquide.

7. Dispositif de nettoyage selon l'une des revendications précédentes, **caractérisé en ce que** la tête de nettoyage (4) comporte deux arrivées d'eau diamétralement opposées.

8. Dispositif de nettoyage selon l'une des revendications précédentes, **caractérisé en ce que** les moyens de nettoyage portés par la tête (4) comportent des moyens de décongélation (36) de la lentille.

9. Dispositif de nettoyage selon la revendication 8, **caractérisé en ce que** les moyens de décongélation consistent en un élément chauffant disposé sur la paroi interne (16) de la tête.

10. Dispositif de nettoyage selon la revendication précédente, **caractérisé en ce que** ledit élément chauffant consiste en une bague disposée sur tout le pourtour de la paroi interne (16).

11. Dispositif de nettoyage selon l'une des revendications 9 ou 10, **caractérisé en ce que** l'élément chauffant est collé sur la paroi interne (16).

12. Dispositif de nettoyage selon l'une des revendications 9 ou 10, **caractérisé en ce que** l'élément chauffant est moulé avec la paroi interne (16).

13. Dispositif de nettoyage selon l'une des revendications 8 à 12, **caractérisé en ce que** la tête comporte un orifice apte à recevoir un câble de commande (38) desdits moyens de décongélation.

14. Dispositif de nettoyage selon l'une des revendications précédentes, **caractérisé en ce que** les moyens de nettoyage portés par la tête (4) consistent en des buses de projection (32) et en des éléments chauffants disposés distinctement sur la paroi annulaire interne (16) de la tête.

15. Dispositif de nettoyage selon la revendication précédente, **caractérisé en ce que** les buses de projection (32) et les éléments chauffants, soudés ou collés, sont disposés alternativement sur tout le pourtour de la paroi annulaire interne (16) de la tête (4).

16. Véhicule automobile comportant un dispositif de nettoyage (1) d'une caméra (2) selon l'une des revendications précédentes.

17. Véhicule automobile selon la revendication précédente, **caractérisé en ce que** la caméra (2) apte à être nettoyée par ledit dispositif de nettoyage (1) est une caméra de recul, disposée à l'arrière du véhicule et orientée pour prendre des vues d'une scène de route s'étendant à l'arrière du véhicule.

## Patentansprüche

1. Reinigungsvorrichtung (1) für die Linse (8) einer Kamera (2) eines Kraftfahrzeugs, die geeignet ist, Aufnahmen entlang einer optischen Längsachse auszuführen, umfassend einen Reinigungskopf (4), der in einer festen Position in Bezug auf die Kamera (2) angeordnet ist und eine ringförmige Grundform mit einer mit der Achse der Linse zusammenfallenden Achse aufweist, wobei der Reinigungskopf eine ringförmige Innenwand (16) umfasst, die entlang der optischen Achse stromab der Linse angeordnet ist und Reinigungsmittel (20, 36) trägt, die zur Linse hin ausgerichtet sind, wobei die ringförmige Innenwand (16) des Kopfes (4) mit mindestens einer Mehrzahl von Düsen (32) versehen ist, durch die ein Fluid in Richtung der Linse (8) austreten kann, **dadurch gekennzeichnet, dass** der Reinigungskopf (4) einen Abflussschlitz (34) umfasst, der sich radial von der ringförmigen Innenwand (16) aus zur Außenseite des Kopfes hin erstreckt, wobei dieser Schlitz in der festen Position des Kopfes in Bezug auf die Kamera (2) an der Unterseite des Kopfes angeordnet ist.

2. Reinigungsvorrichtung nach Anspruch 1, **dadurch gekennzeichnet, dass** der Reinigungskopf (4) mindestens einen ersten ringförmigen Teil (10), der die Basis bildet und geeignete Abmessungen aufweist, um um die Kamera (2) herum angeordnet zu werden, und einen zweiten Teil (12), der die Halterung für die Reinigungsmittel (20, 36) bildet, umfasst, wobei der zweite Teil so angeordnet ist, dass die Reinigungsmittel entlang der optischen Achse stromab der Linse (8) angeordnet sind und zu dieser hin ausgerichtet sind.

3. Reinigungsvorrichtung nach Anspruch 2, **dadurch gekennzeichnet, dass** der zweite Teil (12) einen geringeren Durchmesser als der erste Teil (10) aufweist.

4. Reinigungsvorrichtung nach einem der vorhergehenden Ansprüche, **dadurch gekennzeichnet, dass** die ringförmige Innenwand (16) parallel zur Achse des Kopfes (4) ist, wobei die Düsen (32) durch eine Bohrung (30) gebildet werden, die an der ringförmigen Innenwand mündet und in Bezug auf die Normale zur ringförmigen Innenwand in Richtung des Teils des Kopfes, der um das Objektiv herum angeordnet ist, geneigt ist, um das Ausstoßen von Flüssigkeit in Richtung der Linse (8) zu ermöglichen, die längs stromauf der Düsen angeordnet ist.

5. Reinigungsvorrichtung nach einem der vorhergehenden Ansprüche, **dadurch gekennzeichnet, dass** der Reinigungskopf (4) ferner eine Innenleitung (24) zur Zirkulation von Flüssigkeit umfasst, die in der Dicke des Kopfes angeordnet ist, um jede Düse (32) zu versorgen, und an mindestens einen Wasserzuleitungsschlauch (28) angeschlossen ist.

6. Reinigungsvorrichtung nach Anspruch 5, **dadurch gekennzeichnet, dass** sich die Düsen (32) von der Innenleitung (24) zur Zirkulation von Flüssigkeit aus erstrecken.

7. Reinigungsvorrichtung nach einem der vorhergehenden Ansprüche, **dadurch gekennzeichnet, dass** der Reinigungskopf (4) zwei diametral entgegengesetzte Wasserzuleitungen umfasst.

8. Reinigungsvorrichtung nach einem der vorhergehenden Ansprüche, **dadurch gekennzeichnet, dass** die vom Kopf (4) getragenen Reinigungsmittel Enteisungsmittel (36) zum Enteisen der Linse umfassen.

9. Reinigungsvorrichtung nach Anspruch 8, **dadurch gekennzeichnet, dass** die Enteisungsmittel aus einem Heizelement bestehen, das an der Innenwand (16) des Kopfes angeordnet ist.

10. Reinigungsvorrichtung nach dem vorhergehenden Anspruch, **dadurch gekennzeichnet, dass** das Heizelement aus einem Ring besteht, der über den gesamten Umfang der Innenwand (16) angeordnet ist.

11. Reinigungsvorrichtung nach einem der Ansprüche 9 oder 10, **dadurch gekennzeichnet, dass** das Heizelement an die Innenwand (16) geklebt ist.

12. Reinigungsvorrichtung nach einem der Ansprüche 9 oder 10, **dadurch gekennzeichnet, dass** das Heizelement mit der Innenwand (16) geformt ist.

13. Reinigungsvorrichtung nach einem der Ansprüche 8 bis 12, **dadurch gekennzeichnet, dass** der Kopf eine Öffnung umfasst, die geeignet ist, ein Steuerkabel (38) der Enteisungsmittel aufzunehmen.

14. Reinigungsvorrichtung nach einem der vorhergehenden Ansprüche, **dadurch gekennzeichnet, dass** die vom Kopf (4) getragenen Reinigungsmittel aus Spritzdüsen (32) und aus Heizelementen bestehen, die separat an der ringförmigen Innenwand (16) des Kopfes angeordnet sind.

15. Reinigungsvorrichtung nach dem vorhergehenden Anspruch, **dadurch gekennzeichnet, dass** die Spritzdüsen (32) und die Heizelemente, die gelötet oder geklebt sind, abwechselnd über den gesamten Umfang der ringförmigen Innenwand (16) des Kopfes (4) angeordnet sind.

16. Kraftfahrzeug mit einer Reinigungsvorrichtung (1) für eine Kamera (2) nach einem der vorhergehenden Ansprüche.

17. Kraftfahrzeug nach dem vorhergehenden Anspruch, **dadurch gekennzeichnet, dass** die Kamera (2), die geeignet ist, von der Reinigungsvorrichtung (1) gereinigt zu werden, eine Rückfahrkamera ist, die am Heck des Fahrzeugs angeordnet ist und so ausgerichtet ist, dass sie Aufnahmen einer Straßenszene aufnimmt, die sich hinter dem Fahrzeug abspielt.

## Claims

1. Cleaning device (1) for cleaning a lens (8) of a motor vehicle camera (2) which lens is designed to capture images along a longitudinal optical axis, comprising a cleaning head (4) arranged in a fixed position with respect to the camera (2) and having an annular overall shape, of axis coincident with the axis of the lens, said cleaning head comprising an internal annular wall (16) being arranged along the optical axis behind the lens and bearing cleaning means (20, 36) oriented towards the lens, the internal annular wall (16) of the head (4) being equipped with at least a plurality of nozzles (32) via which a fluid is able to exit bound for the lens (8), **characterized in that** the cleaning head (4) comprises a discharge slot (34) extending radially from the internal annular wall (16) towards the outside of the head, the said slot being positioned vertically at the bottom of the head in the fixed position of the head with respect to the camera (2) .

2. Cleaning device according to Claim 1, **characterized in that** the cleaning head (4) comprises at least an annular first part (10) forming a base and having dimensions able to be positioned around the camera (2), and a second part (12) forming a support for the cleaning means (20, 36), the said second part being arranged in such a way that the said cleaning means are positioned along the optical axis behind the lens (8) and oriented towards the latter.

3. Cleaning device according to Claim 2, **characterized in that** the second part (12) has a diameter slightly smaller than that of the first part (10) .

4. Cleaning device according to one of preceding Claims, **characterized in that** the said internal annular wall (16) is parallel to the axis of the head (4), the nozzles (32) being formed by a bore (30) opening onto the internal annular wall and being inclined with respect to the normal to the internal annular wall in the direction of that part of the head that is arranged around the objective so as to allow liquid to be ejected towards the lens (8) positioned longitudinally ahead of the said nozzles.

5. Cleaning device according to one of preceding Claims, **characterized in that** the said cleaning head (4) further comprises an internal liquid circulation duct (24) formed within the thickness of the head to serve each nozzle (32) and connected to at least one water supply pipe (28).

6. Cleaning device according to Claim 5, **characterized in that** the nozzles (32) extend from the internal liquid circulation duct (24).

7. Cleaning device according to one of preceding Claims, **characterized in that** the cleaning head (4) comprises two diametrically opposite water inlets.

8. Cleaning device according to one of preceding Claims, **characterized in that** the cleaning means borne by the head (4) comprise de-icing means (36) for de-icing the lens.

9. Cleaning device according to Claim 8, **characterized in that** the de-icing means consist of a heating element positioned on the internal wall (16) of the head.

10. Cleaning device according to the preceding Claim, **characterized in that** the said heating element consists of a ring arranged all around the internal wall (16).

11. Cleaning device according to one of Claims 9 or 10, **characterized in that** the heating element is bonded to the internal wall (16).

12. Cleaning device according to one of Claims 9 or 10, **characterized in that** the heating element is moulded with the internal wall (16).

13. Cleaning device according to one of Claims 8 to 12, **characterized in that** the head comprises an orifice able to receive a control cable (38) for operating the said de-icing means.

14. Cleaning device according to one of preceding Claims, **characterized in that** the cleaning means borne by the head (4) consist of spray nozzles (32) and of heating elements arranged separately on the internal annular wall (16) of the head.

15. Cleaning device according to the preceding claim, **characterized in that** the spray nozzles (32) and the heating elements, which are welded or bonded, are arranged alternately around the entire periphery of the internal annular wall (16) of the head (4).

16. Motor vehicle comprising a cleaning device (1) for cleaning a camera (2) according to one of the preceding claims.

17. Motor vehicle according to the preceding claim, **characterized in that** the camera (2) that can be cleaned by the said cleaning device (1) is a reversing camera positioned at the rear of the vehicle and oriented to capture images of a road scene extending to the rear of the vehicle.
